# EUROPÄISCHE PATENTSCHRIFT

(11) **EP 3 299 078 B1**
(45) Veröffentlichungstag und Bekanntmachung des Hinweises auf die Patenterteilung: **01.12.2021**
(21) Anmeldenummer: 17173573.1
(22) Anmeldetag: 30.05.2017
(51) Int. Cl.: B01D 53/04, F24F 3/16

(54) **FILTERKASSETTE MIT UNTERTEILUNGEN**
FILTER CASSETTE WITH PARTITIONS
CASSETTE FILTRANTE COMPRENANT DES COMPARTIMENTS

(30) Priorität: 23.09.2016 DE 202016005860 U
(43) Veröffentlichungstag der Anmeldung: 28.03.2018
(73) Patentinhaber: Prima Klima Trading CZ s.r.o., 33828 Radnice u Rokycany (CZ)
(72) Erfinder: Reeh, Gerhard, 33828 Radnice u Rokycany (CZ)
(74) Vertreter: Lehmann, Horst Michael

(56) Entgegenhaltungen:
- WO-A1-2015/123454
- US-A1- 2012 219 462

## Beschreibung

Die Erfindung betrifft eine Filterkassette. Des Weiteren betrifft die Erfindung eine Filtervorrichtung mit einer Filterkassette.

Es sind Filterkassetten für den Einsatz in einer Filtervorrichtung bekannt, die mit einem Filtermaterial befüllt sind. Dabei werden als Filtermaterialien häufig Aktivkohlepartikel oder Kokosnussschale verwendet, welche in der Lage sind, Verunreinigungen eines durchströmenden Gases zu adsorbieren.

Es ist Aufgabe der Erfindung, eine Filterkassette zur Verfügung zu stellen, in der das Filtermaterial innerhalb der Filterkassette stabil fixiert ist und gewährleistet ist, dass ein zu filternder Gasstrom durch das Filtermaterial in ausreichendem Maß gefiltert wird,

Die internationale Patentanmeldung WO 2015 / 123 454 A1 beschreibt ein regenerierbares Luftreinigungssystem, das eine Luftatrömungsanordnung mit austauschbaren Patronen umfasst, die in einer parallelen Ausrichtung angeordnet sind und zum leichten Einsetzen und Entfernen der Patronen ausgelegt sind. Das Design der Kartusche verbessert die Kontaktfläche, reduziert den Druckabfall und ermöglicht die Konstruktion ähnlicher Anordnungen mit unterschiedlichem Luftströmungsdurchsatz unter Verwendung der gleichen Kartusche, während ein einfacher Austausch des Sorptionsmittels im Feld erleichtert wird. Die Kartusche kann in kleinere Kammern unterteilt werden, wodurch die mechanischen Eigenschaften der Kartusche und die Gleichmäßigkeit der Verteilung des Sorptionsmittels verbessert werden.

Die US-Patentanmeldung US 2012 / 219 462 A1 beschreibt ein Reinigungsfilter, das in einem Luftreinigungsgerät bereitgestellt wird, um gasförmige Verunreinigungen (Geruch / chemische Substanzen) und Partikel (Staub, mikrobielle Partikel, allergene Partikel und dergleichen) zu filtern und die Filterleistung für vorbestimmte Verunreinigungen zu regenerieren oder wiederherzustellen. Das Reinigungsfilter weist ein Gasauffangelement und ein Partikelauffangelement auf. Mindestens eines von dem Gaseinfangelement und dem Partikelauffangelement umfasst: ein Einfangmaterial zum Einfangen einer vorbestimmten Verunreinigung in der Luft und ein Filtermaterialhalteelement, um das Filtermaterial so zu halten, dass es dem Luftatrömungakanal gegenüberliegt, wobei eine Luftdurchlässigkeit sichergestellt ist. Das Filtermaterialhalteelement wird, wenn es von einem Hauptkörper der Reinigungsvorrichtung entfernt wird, einem Regenerationsprozess zum Regenerieren der Filterleistung des Filtermaterials ausgesetzt.

Diese Aufgabe wird durch eine Filterkassette gemäß Anspruch 1 und durch eine Filtervorrichtung gemäß Anspruch 11 gelöst.

Eine Filterkassette gemäß den Ausführungsformen der Erfindung umfasst eine zumindest teilweise gasdurchlässige erste Stirnfläche, eine gegenüber der ersten Stirnfläche angeordnete zumindest teilweise gasdurchlässige zweite Stirnfläche und eine umlaufende Randwandung, die zusammen mit der ersten Stirnfläche und der zweiten Stirnfläche einen Innenbereich der Filterkassette umgibt. Der Innenbereich der Filterkassette ist mit einem partikelförmigen Filtermaterial befüllt. Die Filterkassette umfasst eine Mehrzahl von Trennwänden, die sich innerhalb des Innenbereichs der Filterkassette jeweils von der ersten Stirnfläche zur zweiten Stirnfläche erstrecken und den Innenbereich in eine Mehrzahl von Abteilungen unterteilen. Im Innenbereich der Filterkassette sind zusätzlich zu den Trennwänden ein oder mehrere Trennstege angeordnet, wobei an jedem Trennsteg jeweils mindestens ein Spalt zwischen dem Trennsteg und einer oder beiden Stirnflächen ausgebildet ist, wobei sich das Filtermaterial durch den jeweils mindestens einen Spalt hindurch erstreckt.

Bei der Filterkassette entsprechend den Ausführungsformen der Erfindung sind Trennwände vorgesehen, die den Innenraum in einzelne Abteilungen aufteilen, Die Abteilungen sind mit Filtermaterial befüllt. Durch die Trennwände wird eine Fixierung des Fitermaterials im Innenraum der Filterkassette erzielt. Insbesondere wird durch die Trennwände verhindert, dass bei vertikaler oder schräger Orientierung der Filterkassette relativ zur Richtung der Schwerkraft das Filtermaterial infolge der Schwerkraft in den unteren Bereich des Innenraums rutscht und sich dort so ansammelt, dass im oberen Bereich des Innenraums ein von Filtermaterial freier Bereich entsteht, durch den das zu filternde Gas ungehindert und ungefiltert hindurchströmen kann. Die Bezeichnungen "oben" und unten" sind dabei in Bezug auf die Richtung der Schwerkraft zu verstehen. Durch die Trennwände wird unabhängig von der jeweiligen Orientierung der Filterkassette eine gleichmäßige Befüllung des gesamten Innenraums mit Filtermaterial gewährleistet.

Allerdings liegt das Filtermaterial im Bereich der Trennwände häufig nicht durchgängig an der jeweiligen Trennwand an und es bilden sich daher gerade im Bereich unmittelbar an der Trennwand Freiräume und Durchlässe zwischen dem Filtermaterial und der Trennwand aus. Über diese Freiräume und Durchlässe kann das zu filternde Gas die Filterkassette passieren, ohne durch das Filtermaterial ausreichend gefiltert zu werden. Diese Problematik ergibt sich beispielsweise bei Verwendung von grobkörnigem Filtermaterial, beispielsweise von Aktivkohle oder Kokosnussschale mit vergleichsweise groben Partikeln. Wenn die grobkörnigen Filterpartikel auf den glatten Trennwänden aufliegen, entstehen eine Vielzahl von Hohlräumen, durch die das zu filternde Gas passieren kann.

Bei der Filterkassette entsprechend den Ausführungsformen der Erfindung sind zusätzlich zu den Trennwänden, die sich von einer Stirnfläche zu der gegenüberliegenden Stirnfläche erstrecken, Trennstege vorgesehen, die sich nicht vollständig von der ersten Stirnfläche zur zweiten Stirnfläche erstrecken. Vielmehr ist an jedem Trennsteg jeweils mindestens ein Spalt zwischen dem Trennsteg und einer oder beiden Stirnflächen ausgebildet, durch den sich das Filtermaterial hindurch erstrecken kann. Bei Einsatz derartiger Trennstege kann sich das Filtermaterial im Bereich an der Innenseite der jeweiligen Stirnfläche durch den mindestens einen Spalt hindurch erstrecken. Dadurch wird erreicht, dass im Bereich an der Innenseite der jeweiligen Stirnfläche eine durchgängige Schicht von Filtermaterial ausgebildet werden kann. Durch diese durchgängige Filtermaterialschicht wird die Ausbildung von Hohlräumen und Durchlässen verringert, durch die das zu filternde Gas ungehindert hindurch strömen könnte. Beispielsweise können sich bei Verwendung von körnigem Filtermaterial die einzelnen Filtermaterialpartikel innerhalb der Filtermaterialschicht so zueinander ausrichten, dass sie ineinandergreifen, wobei infolge dieses Ineinandergreifens nur vergleichsweise geringe Hohlräume und Durchlässe zwischen den Filterpartikeln ausgebildet werden. Daher wird durch die durchgängige Schicht von Filtermaterial gewährleistet, dass das durchströmende Gas durch die Filtermaterialschicht wirksam gefiltert wird und mit dem Filtermaterial ausreichend intensiv in Kontakt tritt, um eine zufriedenstellende Filterwirkung zu erzielen. Darüber hinaus wird durch die Trennstege eine zusätzliche Fixierung und Stabilisierung des Filtermaterials innerhalb der Abteilungen bewirkt. Insbesondere wird durch die Trennstege ein Verrutschen des Filtermaterials verhindert.

Insgesamt wird durch die Kombination von Trennwänden und Trennstegen eine optimale Fixierung des Filtermaterials innerhalb der Filterkassette erzielt, wobei durch die Ausbildung durchgängiger Filtermaterialschichten, welche sich durch die Spalte der Trennstege hindurch erstrecken, die Filterwirkung verbessert wird. Die zusätzlichen Trennstege verursachen bei der Herstellung der Filterkassetten keinen signifikanten Mehraufwand. Eine Filterkassette, die sowohl Trennwände als auch Trennstege aufweist, kann kostengünstig hergestellt und angeboten werden. Vorzugsweise handelt es sich bei der Filterkassette um ein Spritzgussteil. Vorzugsweise besteht die Filterkassette aus Kunststoff.

Vorzugsweise ist der mindestens eine Spalt dazu ausgelegt, dass das im Innenbereich befindliche Filtermaterial durch den mindestens einen Spalt hindurch durchgängig an einer Innenseite der jeweiligen Stirnfläche anliegend anordenbar ist.

Vorzugsweise ist an jedem Trennsteg ein Spalt zwischen dem Trennsteg und einer der Stirnflächen ausgebildet oder es sind Spalte zwischen dem Trennsteg und beiden Stirnflächen ausgebildet.

Vorzugsweise ist an jedem Trennsteg zwischen dem Trennsteg und der ersten Stirnfläche ein Spalt ausgebildet oder zwischen dem Trennsteg und der zweiten Stirnfläche ist ein Spalt ausgebildet oder sowohl zwischen dem Trennsteg und der ersten Stirnfläche als auch zwischen dern Trennsteg und der zweiten Stirnfläche sind Spalte ausgebildet.

Vorzugsweise erstrecken sich die Trennstege nicht durchgehend von der ersten Stirnfläche zur zweiten Stirnfläche. Vorzugsweise erstrecken sich die Trennstege aber über mehr als 60% des Abstands zwischen der ersten und der zweiten Stirnfläche. Weiter vorzugsweise erstrecken sich die Trennstege über mehr als 80% des Abstands zwischen der ersten und der zweiten Stirnfläche.

Vorzugsweise sind die Trennstege dazu ausgebildet, die Abteilungen weiter zu unterteilen.

Vorzugsweise sind die ein oder mehreren Trennstege dazu ausgebildet, ein innerhalb des Innenbereichs der Filterkassette angeordnetes Filtermaterial zusätzlich zu stabilisieren.

Vorzugsweise sind die Abteilungen der Filterkassette jeweils mit einem Filtermaterial befüllt.

Vorzugsweise ist das Filtermaterial durch den mindestens einen Spalt hindurch durchgängig an einer Innenseite der jeweiligen Stirnfläche anliegend angeordnet.

Vorzugsweise handelt es sich bei dem Filtermaterial um mindestens eines von Aktivkohle und Kokosnussschale. Vorzugsweise handelt es sich bei dem Filtermaterial um ein partikelförmiges Filtermaterial. Weiter vorzugsweise handelt es sich bei dern Filtermaterial um ein partikeLFörmiges Filtermaterial mit einer durchschnittlichen Korngröße im Bereich von 0,5 mm bis 5 mm. Weiter vorzugsweise handelt es sich bei dem Filtermaterial um ein partikelförmiges Filterrnaterial mit einer durchschnittlichen Korngröße im Bereich von 2 mm bis 4 mm.

Vorzugsweise ist die Filterkassette zum Filtern eines Gases ausgebildet. Weiter vorzugsweise ist die Filterkassette zum Filtern von Luft ausgebildet.

Vorzugsweise sind die Abteilungen der Filterkasaette von zu filterndem Gas durchströmbar.

Vorzugsweise ist die Filterkassette in axialer Richtung durch die erste Stirnfläche, das Filtermaterial und die zweite Stirnfläche hindurch von zu filterndem Gas durchströmbar.

Vorzugsweise sind eine oder mehrere der Trennwände als ringförmig umlaufende Trennwände ausgebildet. Vorzugsweise sind eine oder mehrere der Trennwände als sich radial von innen nach außen erstreckende Trennwände ausgebildet.

Vorzugsweise erstrecken sich die Trennwände in axialer Richtung von der ersten Stirnfläche zur zweiten Stirnfläche. Vorzugsweise sind die Trennwände in Richtung der Strömung des Gases ausgerichtet. Vorzugsweise sind die ein oder mehreren Trennstege in Richtung der Strömung des Gases ausgerichtet. Vorzugsweise verlaufen die Trennwände senkrecht zu den Stirnflächen. Vorzugsweise verlaufen die ein oder mehreren Trennstege senkrecht zu den Stirnflächen. Vorzugsweise ist die Filterkassette in Form einer Scheibe ausgebildet. Vorzugsweise ist die Filterkassette in Form einer Scheibe mit kreisförmigen oder polygonalen oder rechteckigen Stirnflächen ausgebildet.

Vorzugsweise erstreckt sich die umlaufende Randwandung vom Rand der ersten Stirnfläche zum Rand der zweiten Stirnfläche.

Vorzugsweise ist eine Höhe der Filterkassette geringer als ein maximaler Durchmesser der Filterkassette.

Vorzugsweise ist die erste Stirnfläche der Filterkassette parallel zur zweiten Stirnfläche angeordnet.

Vorzugsweise ist die Filterkassette als stapelbare Filterkassette ausgebildet.

Vorzugsweise ist an mindestens einer von der ersten und der zweiten Stirnfläche der Filterkassette ein gasdurchlässiges Abdeckmaterial angebracht, das das Filtermaterial innerhalb der Filterkassette hält.

Vorzugsweise handelt es sich bei dem an den Stirnflächen angebrachten gasdurchlässigen Abdeckmaterial um mindestens eines von folgenden: ein Fasermaterial, ein Vliesmaterial, ein Vliesmaterial aus Polyethylenfasern, ein Spinnvlies, ein Mehrkomponenten-Spinnvlies.

Vorzugsweise ist das Abdeckmaterial auf eine jeweilige Stirnfläche der Filterkassette thermisch aufgeschweißt, wobei das Abdeckmaterial mit den Trennwänden, nicht aber mit von der jeweiligen Stirnfläche beabstandeten Trennstegen verschweißt ist.

Vorzugsweise steht das Abdeckmaterial gegenüber einer abzudeckenden Stirnfläche um einen gewissen Überstand nach außen über und deckt dadurch eine Kante zur Randwandung der Filterkassette ab.

Eine Filtervorrichtung entsprechend den Ausführungsforrnen der Erfindung umfasst ein trichterförmiges Halterungsteil und eine Filterkassette wie oben beschrieben, wobei die Filterkassette in eine Aufnahme des trichterförrnigen Halterungsteils einsetzbar ist.

Vorzugsweise ist die Filtervorrichtung zum Filtern eines Gases, insbesondere zum Filtern von Luft ausgebildet.

Vorzugsweise ist die Filterkassette innerhalb der Filtervorrichtung so angeordnet, dass ein zu filterndes Gas durch die erste Stirnfläche, das Filtermaterial und die zweite Stirnfläche der Filterkassette strömt.

Nachfolgend wird die Erfindung anhand eines in der Zeichnung dargestellten Ausführungsbeispiels weiter beschrieben. Es zeigen:
Fig. 1 eine Filtervorrichtung mit einem trichterförrnigen Halterungsteil und einer Filterkassette, die als Saugfilter ein-getzbar ist;
Fig, 2a eine Seitenansicht des trichterförmigen Halterungsteils;
Fig. 2b eine Draufsicht auf das trichterförrnige Halterungsteil;
Fig. 2c eine Schrägbildansicht des trichterförrnigen Halterungsteils;
Fig. 3a eine Schrägbildansicht einer Fitterkassette;
Fig. 3b eine Draufsicht auf die Filterkassette;
Fig. 3c eine Seitenansicht der Filterkassette;
Fig. 4 eine Filtervorrichtung mit einem trichterförmigen Halterungsteil und drei Filterkassetten, die als Saugfilter einsetzbar ist;
Fig. 5 eine Filtervorrichtung mit einem trichterförmigen Halterungsteil, einer Filterkassette und einem weiteren trichterförmigen Halterungsteil, die als Inlinefilter einsetzbar ist;
Fig. 6 eine Filtervorrichtung mit einem trichterförmigen Halterungsteil, drei Filterkassetten und einem weiteren trichterförmigen Halterungsteil, die als Inlinefilter einsetzbar ist.

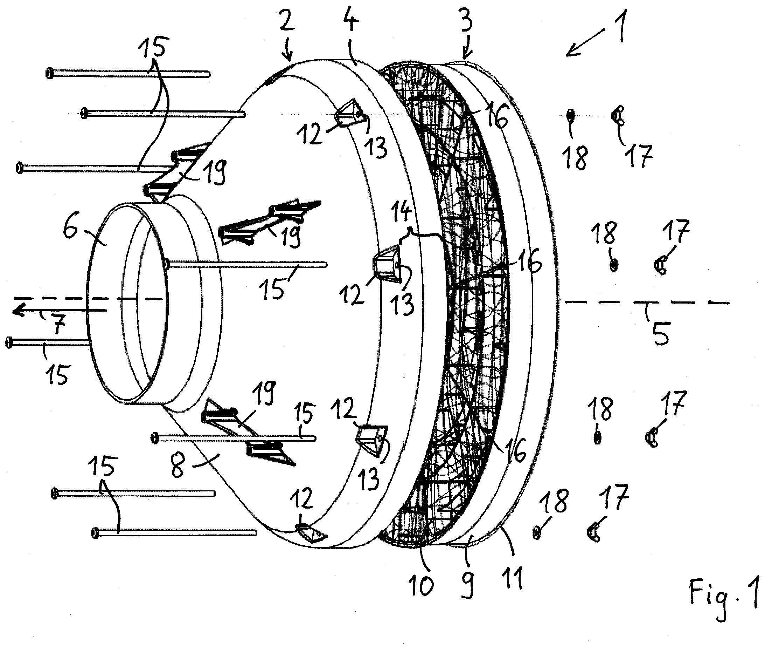

In Fig. 1 ist eine Filtervorrichtung 1 gezeigt, die beispielsweise als Saugfilter eingesetzt werden kann. Die Filtervorrichtung 1 umfasst ein trichterförmiges Halterungsteil 2 sowie eine Filterkassette 3, die mit einem Filtermaterial gefüllt ist. Dabei ist die Filterkassette 3 in eine entsprechende Aufnahme 4 des trichterförmigen Halterungsteils 2 einsetzbar und wird durch das trichterförmige Halterungsteil 2 gehaltert. Das zu reinigende Gas strömt in axialer Richtung durch die Filtervorrichtung 1, wobei die axiale Symmetrieachse 5 der Filtervorrichtung 1 in Fig. 1 als gestrichelte Linie dargestellt ist.

Das trichterförmige Halterungsteil 2 weist an einem in axialer Richtung ersten Ende einen Anschluss 6 für einen Schlauch oder ein Rohr auf, wobei der Anschluss 6 beispielsweise in Form eines Anschlussstutzens realisiert sein kann. Das an den Anschluss 6 angeschlossene Absaugrohr bzw. der Absaugschlauch kann beispielsweise mit einem Sauggebläse, einem Impeller oder einem Ventilator verbunden werden. Auf diese Weise kann Gas, insbesondere Luft, über die Anschlussöffnung des Anschlusses 6 in Richtung des Pfeils 7 aus der Filtervorrichtung 1 abgesogen werden. Ausgehend von dem Anschluss 6 weitet sich die Wandung des trichterförmigen Halterungsteils 2 im Bereich 8 in axialer Richtung trichterförmig nach außen auf und bildet die Aufnahme 4 für die Filterkassette 3. Die Aufnahme 4 befindet sich am zweiten Ende des trichterförmigen Halterungsteils 2, das in axialer Richtung betrachtet gegenüber vom ersten Ende des trichterförmigen Halterungsteils 2 angeordnet ist.

Im Beispiel von Fig. 1 ist die Filterkassette 3 als zylinderförmige Scheibe mit kreisförmigen Stirnflächen 10 und 11 ausgebildet, und dementsprechend weist auch die Aufnahme 4 für die Filterkassette 3 eine kreisförmige Kontur auf. Dabei ist der Durchmesser der Aufnahme 4 deutlich größer als der Durchmesser am Anschluss 6. Beispielsweise kann der Durchmesser der Aufnahme 4 etwa 1,5 bis 7 mal so groß wie der Durchmesser des Anschlusses 6 sein, weiter vorzugsweise 2 bis 5 mal so groß wie der Durchmesser des Anschlusses 6 sein. Die Aufnahme 4 ist zur Halterung der Filterkassette 3 ausgelegt. Hierzu wird die Filterkassette 3 so in die Aufnahme 4 eingesetzt, dass der Rand 9 der Filterkassette 3 ringsum vom Randbereich der Aufnahme 4 umschlossen wird. Die Innenkontur der Aufnahme 4 entspricht also etwa der Außenkontur des Randes 9 der Filterkassette 3. Entlang des Umfangs der Aufnahme 4 sind in regelmäßigen Abständen eine Mehrzahl von Einbuchtungen 12 vorgesehen, die jeweils Schraublöcher 13 zur Verschraubung der Filterkassette 3 mit dem trichterförmigen Halterungsteil 2 aufweisen. Diese Einbuchtungen 12 sind jeweils in einem gewissen Abstand 14 zum Rand der Aufnahme 4 angeordnet. Dabei liegt die Filterkassette 3 vorzugsweise ringsum auf den innerhalb der Aufnahme 4 angeordneten Schraublochdurchführungen auf, die sich an die Einbuchtungen 12 anschließen. Zur Verschraubung des trichterförmigen Halterungsteils 2 mit der Filterkassette 3 werden eine Mehrzahl von Gewindeschrauben 15 von der Seite des trichterförmigen Halterungsteils 2 aus durch die Schraublöcher 13 des trichterförmigen Halterungsteils 2 und die an entsprechenden Positionen angeordneten Schraublöcher 16 der Filterkassette 3 in axialer Richtung hindurchgeschoben und mittels der Flügelmuttern 17 verschraubt, wobei zwischen den Flügelmuttern 17 und der Filterkassette 3 Beilagscheiben 18 angeordnet sein können. An der Außenseite des sich trichterförmig aufweitenden Bereichs 8 des trichterförmigen Halterungsteils 2 sind insgesamt vier Abstandselemente 19 angebracht, die beim Einbau der Filtervorrichtung 1 an einer jeweiligen Einbauwand anliegen und so einen gewissen Abstand zwischen der Einbauwand und dem trichterförmigen Halterungsteil 2 herstellen.

Innerhalb der Filterkassette 3 ist das Filtermaterial angeordnet, das von dem zu reinigenden Gas durchströmt wird und dabei Verunreinigungen absorbiert. Bei dem Filtermaterial kann es sich beispielsweise um Aktivkohle handeln, welche beispielsweise in durchschnittlichen Partikelgrößen im Bereich von etwa 0,5 mm bis 5 mm, weiter vorzugsweise im Bereich von 2 mm bis 4 mm einsetzbar ist. Als Filtermaterial können beispielsweise auch Partikel aus Kokosnussschale eingesetzt werden, welche sich insbesondere zur Absorption von organischen Verunreinigungen des zu filternden Gases eignen. Das Innere der Filterkassette 2 ist durch eine Vielzahl von Trennwänden in eine Vielzahl von einzelnen Filterkammern unterteilt, die jeweils mit Filtermaterial gefüllt sind und separat von dem zu reinigenden Gas durchströmt werden. Dabei ist an den beiden Stirnflächen 10 und 11 der Filterkassette 3 jeweils ein gasdurchlässiges Abdeckmaterial angeordnet, das die Filterkammern an den Stirnflächen 10 und 11 gasdurchlässig abschließt und verhindert, dass das innerhalb der Filterkammern befindliche Filtermaterial aus den Filterkammern austreten kann. Bei dem Abdeckmaterial kann es sich beispielsweise um ein Vliesmaterial aus Kunststofffasern handeln, beispielsweise um ein Vliesmaterial aus Polyethylenfasern. Bei dem Abdeckmaterial kann es sich beispielsweise um ein Spinnvlies handeln, beispielsweise um ein Mehrkomponenten-Spinnvlies, welches durch Verwendung von zwei unterschiedlichen Fasern eine erhöhte Steifigkeit bietet. Vorzugsweise wird ein Vliesmaterial mit einer Dicke von beispielsweise 0,5 mm verwendet. Ein derartiges Vliesmaterial zeichnet sich durch hohe Gasdurchlässigkeit aus und kann von dem zu filternden Gas durchströmt werden. Sofern das Vliesmaterial aus Kunststofffasern hergestellt ist, kann das Vliesmaterial durch thermisches Anschweißen mit dem Rand 9 und den Trennwänden im Inneren der Filterkassette 3 verbunden werden. Dabei wird das Abdeckmaterial vorzugsweise etwas größer als die Stirnflächen 10 und 11 der Filterkassette 3 zugeschnitten, so dass das Abdeckmaterial über den Rand 9 der Filterkassette 3 hinaus etwas übersteht. Dadurch deckt das Vliesmaterial die Kante am Rand der Filterkassette 3 ab, so dass das Vliesmaterial nach dem Einsetzen der Filterkassette 3 in die Aufnahme 4 zwischen dem Rand 9 der Filterkassette 3 und der Aufnahme 4 angeordnet ist und beim Zusammenschrauben der Filtervorrichtung mittels der Gewindeschrauben 15 in axialer Richtung zwischen dem Rand 9 der Filterkassette 3 und der Aufnahme 4 so zusammengedrückt wird, dass zwischen der Aufnahme 4 und der Filterkassette 3 ein gasdichter Abschluss ausgebildet wird.

Bei dem in Fig. 1 gezeigten Beispiel ist die Filterkassette 3 als Scheibe mit kreisrunden Stirnflächen 10 und 11 ausgebildet. Dementsprechend weist auch die Aufnahme 4 für die Filterkassette 3 eine kreisrunde Innenkontur auf, um die Filterkassette 3 formschlüssig aufnehmen zu können. Daher ist das trichterförmige Halterungsteil 2 abgesehen von den Einbuchtungen 12 und den Abstandselementen 19 als rotationssymmetrisches Formteil ausgebildet, welches rotationssymmetrisch um die axiale Symmetrieachse 5 ausgebildet ist.

Die Filterkassette 3 muss allerdings nicht notwendigerweise eine kreisförmige Stirnfläche aufweisen. Die Filterkassette 3 könnte ebenso eine rechteckige, quadratische oder polygonale Stirnfläche aufweisen. In diesem Fall würde die Kontur der Aufnahme 4 der Kontur der Filterkassette 3 entsprechen, so dass sich in diesem Fall eine quadratische, rechteckige oder polygonale Aufnahme 4 ergeben würde. Auch in diesem Fall würde sich die Wandung des trichterförmigen Halterungsteils 2 vom Anschluss 6 aus trichterförmig zur Aufnahme 4 hin aufweiten. Allerdings wäre das Halterungsteil 2 in diesem Fall nicht rotationssymmetrisch, sondern lediglich drehsymmetrisch ausgebildet.

Das trichterförmige Halterungsteil 2 kann beispielsweise aus Metall, Kunststoff oder Keramik bestehen. Vorzugsweise ist das trichterförmige Halterungsteil 2 als Kunststoffformteil ausgebildet, welches beispielsweise mittels eines Spritzgussverfahrens herstellbar ist.

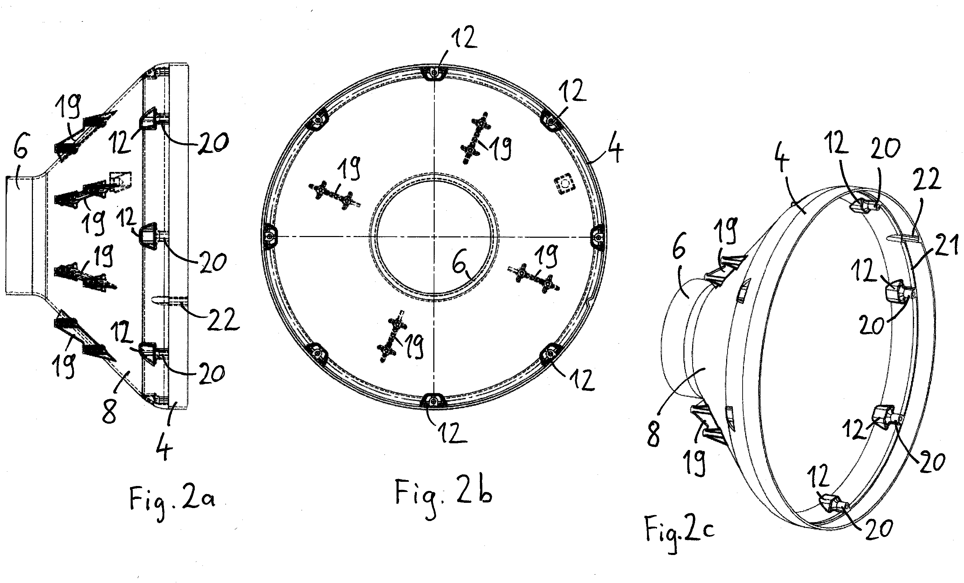

Fig. 2a zeigt eine Seitenansicht, Fig. 2b eine Draufsicht und Fig. 2c eine Schrägbildansicht des trichterförmigen Halterungsteils 2. Es ist zu erkennen, dass sich das trichterförmige Halterungsteil 2 von dem Anschluss 6 ausgehend im Bereich 8 trichterförmig zur kreisförmigen Aufnahme 4 aufweitet, wobei die Aufnahme 4 zur Halterung der Filterkassette 3 ausgebildet ist. Dabei weist das trichterförmige Halterungsteil 2 im Bereich des Anschlusses 6 einen Durchmesser von 10, 12,5 oder 15 cm auf und weitet sich zur Aufnahme 4 hin bis zu einem Durchmesser von 36,5 cm auf. Dabei ist das trichterförmige Formteil 2 als zur axialen Symmetrieachse 5 rotationssymmetrisches Formteil ausgebildet. In den Fig. 2a, 2b und 2c sind außerdem die Einbuchtungen 12 mit den Schraublöchern 13 zu erkennen, und in Fig. 2c ist zu erkennen, dass die Schraublöcher durch Schraubhülsen 20 hindurch verlaufen. Wenn die Filterkassette 3 in die Aufnahme 4 des trichterförmigen Halterungsteils 2 eingesetzt wird, liegt die Filterkassette 3 auf den Enden der Schraubhülsen 20 und außerdem auf einer im Inneren der Aufnahme 4 kreisförmig umlaufenden Auflagestufe 21 auf. Dabei entspricht die Außenkontur der Filterkassette 3 der Innenkontur der Aufnahme 4, so dass der Rand 9 der Filterkassette ringsum vom Randbereich der Aufnahme 4 umschlossen und gehaltert wird. An der Innenseite der Aufnahme 4 kann eine Positioniernase 22 vorgesehen sein, die dazu ausgelegt ist, in eine entsprechende Positionierrille an der Außenseite der Filterkassette 3 einzugreifen, um eine vorgebbare Orientierung der Filterkassette 3 relativ zur Aufnahme 4 zu erreichen. Darüber hinaus sind in den Fig. 2a bis 2c die Abstandselemente 19 zu erkennen, die an den sich trichterförmig aufweitenden Bereich 8 angeformt sind und einen gewissen Mindestabstand zwischen einer Einbauwandung und dem sich trichterförmig aufweitenden Bereich 8 gewährleisten.

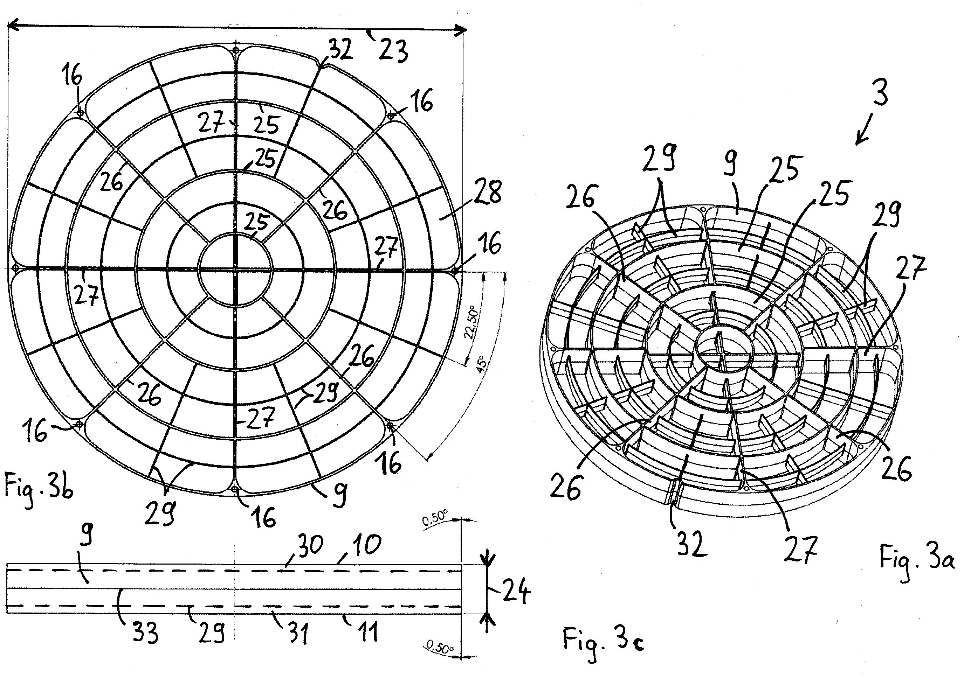

In den Fig. 3a bis 3c ist eine Ausführungsform der Filterkassette 3 gezeigt, welche in der in Fig. 1 gezeigten Filtervorrichtung verwendet werden kann. Die in Fig. 3a bis 3c gezeigte Ausgestaltung ist jedoch keineswegs zwingend, es können auch anders ausgestaltete Filterkassetten in der Filtervorrichtung 1 von Fig. 1 eingesetzt werden. Fig. 3a zeigt eine Schrägbildansicht, Fig. 3b eine Draufsicht und Fig. 3c eine Seitenansicht der Filterkassette 3. Dabei ist die Filterkassette 3 an beiden Stirnflächen 10 und 11 mit einem gasdurchlässigen Abdeckmaterial versehen. Um das Innere der Filterkassette 3 erkennbar zu machen, ist das Abdeckmaterial in den Fig. 3a bis 3c weggelassen.

Die in den Fig. 3a bis 3c gezeigte Filterkassette 3 ist als Scheibe ausgebildet und weist eine kreisförmige Grundfläche auf, die von einem gasundurchlässigen Rand 9 umschlossen ist. Dabei ist der Durchmesser 23 der Filterkassette 3 größer als die Höhe 24 der Filterkassette 3. Das Filtermaterial ist im Inneren der Filterkassette 3 zwischen den beiden Stirnflächen 10 und 11 angeordnet. Dabei wird das Innere der Filterkassette 3 durch eine Mehrzahl von Trennwänden 25-27 in eine Vielzahl von Abteilungen 28 unterteilt, wobei das Filtermaterial innerhalb der Abteilungen 28 angeordnet ist. Jede der Trennwände 25-27 erstreckt sich von der ersten Stirnfläche 10 zur zweiten Stirnfläche 11 über die gesamte Höhe 24 der Filterkassette 3, so dass jede der so gebildeten Abteilungen 28 an allen Seiten von Trennwänden umschlossen ist und zudem an den Stirnflächen 10 und 11 durch das Abdeckmaterial abgedeckt wird. Jede der Abteilungen 28 wird von dem zu reinigenden Gas durchströmt, so dass das innerhalb der Abteilungen 28 angeordnete Filtermaterial Verunreinigungen des durchströmenden Gases absorbieren kann. Hierzu sind die Trennwände 25-27 in der Richtung des durchströmenden Gases ausgerichtet, so dass sie dem hindurchströmenden Gas möglichst wenig Widerstand entgegensetzen. Wenn die in Fig. 3b gezeigten Trennwände 25-27 in Richtung senkrecht zur Zeichenebene mit zu filterndem Gas durchströmt werden, dann setzen die in Richtung des durchströmenden Gases ausgerichteten Trennwände 25-27 dem durchströmenden Gas infolge ihrer Ausrichtung nur einen sehr geringen Widerstand entgegen. Dadurch wird jede der Abteilungen 28 gleichmäßig von dem zu reinigenden Gas durchströmt.

Bei dem in den Fig. 3a bis 3c gezeigten Beispiel einer Filterkassette 3 umfassen die Trennwände eine Mehrzahl von ringförmig umlaufenden Trennwänden 25. Darüber hinaus umfassen die Trennwände eine Mehrzahl von sich radial nach außen erstreckenden Trennwänden 26 und 27, die den Innenbereich bzw. Teile des Innenbereichs der Filterkassette 3 in eine Mehrzahl von Sektoren unterteilen. Dabei erstrecken sich die Trennwände 26 von der ersten der ringförmig umlaufenden Trennwände 25 aus radial nach außen bis hin zum Rand 9. Die Trennwände 27 erstrecken sich von der zweiten der ringförmig umlaufenden Trennwände 25 aus in radialer Richtung bis zum Rand 9. Durch eine derartige Unterteilung des Innenbereichs der Filterkassette 3 wird erreicht, dass die unterschiedlichen Abteilungen 28 alle eine vergleichbare Größe aufweisen.

Als Filtermaterial für die Filterkassette 3 kann beispielsweise Aktivkohle oder Kokosnussschale von unterschiedlicher Partikelgröße verwendet werden. Beispielsweise kann Aktivkohle mit einer durchschnittlichen Partikelgröße im Bereich von 0,5 mm bis 5 mm, weiter vorzugsweise im Bereich von 2 mm bis 4 mm eingesetzt werden.

Durch die Unterteilung des Innenraums der Filterkassette 3 in unterschiedliche Abteilungen 28 wird dabei erreicht, dass das Filtermaterial gleichmäßig über den gesamten Querschnitt der Filterkassette 3 hinweg angeordnet ist. Dabei wird durch die Trennwände 25-27 verhindert, dass sich das Filtermaterial bei vertikaler oder schräger Anordnung der Filterkassette 3 infolge der Schwerkraft im unteren Bereich der Filterkassette 3 ansammelt, so dass sich im obersten Bereich der Filterkassette 3 ein freier Bereich ausbildet, der nicht mit Filtermaterial befüllt ist und somit von dem zu reinigenden Gas durchströmt werden könnte. Durch die Trennwände 25-27 wird also gewährleistet, dass über die gesamte Stirnfläche der Filterkassette 3 hinweg eine gleichmäßige Beladung mit Filtermaterial vorhanden ist und dass sich keine von Filtermaterial freien Stellen ausbilden, durch die das Gas ungefiltert hindurchströmen könnte.

Um das innerhalb jeder Abteilung 28 befindliche Filtermaterial darüber hinaus noch weiter zu fixieren, können innerhalb jeder Abteilung 28 zusätzlich Trennstege 29 angeordnet sein. Im Unterschied zu den Trennwänden 25-27, die sich über die gesamte Höhe 24 der Filterkassette 3 erstrecken, erstrecken sich die Trennstege 29 nur über einen Teil der Höhe 24 der Filterkassette 3 und erstrecken sich somit nicht über die gesamte Höhe 24 von der ersten Stirnfläche 10 zur zweiten Stirnfläche 11 der Filterkassette 3. Vielmehr ist zwischen dem Trennsteg 29 und der ersten Stirnfläche 10 ein erster Freiraum 30 vorgesehen und zwischen dem Trennsteg 29 und der zweiten Stirnfläche 11 ist ein zweiter Freiraum 31 vorgesehen.

Durch das Belassen von Freiräumen 30, 31 in den Bereichen der Abteilung 28 nahe den Stirnflächen 10 und 11 wird erreicht, dass entlang der jeweiligen Stirnfläche 10 oder 11 oberhalb und unterhalb der Trennstege 29 das Filtermaterial jeweils durchgehend angeordnet ist. Indem die Trennstege 29 also nicht bis zu den Stirnflächen 10 und 11 hin reichen, sondern bereits vorher enden, wird erreicht, dass entlang der Stirnflächen 10 und 11 trotz des Vorhandenseins der fixierenden Trennstege 29 eine durchgehende Schicht von Filtermaterial angeordnet ist. Durch diese durchgehende Anordnung des Filtermaterials entlang der Stirnflächen bzw. entlang des an den Stirnflächen angebrachten Abdeckmaterials wird insbesondere die Entstehung von Hohlräumen und Zwischenräumen zwischen den Filterpartikeln verhindert, welche ein ungehindertes Durchströmen des zu filternden Gases erlauben würden und somit die Filterwirkung der Filterkassette 3 herabsetzen könnten. Indem die Trennstege 29 absichtlich nicht bis hin zu den Stirnflächen 10 und 11 geführt werden, wird insofern eine vollständigere und verbesserte Filterwirkung der Filterkassette 3 für das durchströmende Gas erzielt. Nichtsdestotrotz bewirken auch die schmäleren Trennstege 29 eine Fixierung des Filtermaterials innerhalb der jeweiligen Abteilung 28, so dass verhindert wird, dass das Filtermaterial innerhalb der Abteilung 28 schwerkraftbedingt zu einer Seite hin abrutscht und somit einen Freiraum innerhalb der Abteilung 28 für das durchströmende Gas schafft, durch den das Gas ungefiltert durchströmen könnte. Durch die Kombination von Trennwänden 25-27 und Trennstegen 29 wird daher die Entstehung von Freiräumen im jeweiligen Filtergranulat bestmöglich verhindert, so dass eine effektive Filterung des Gasstroms erzielt wird.

Zur Befüllung der Filterkassette 3 mit Filtermaterial wird zunächst ein Zuschnitt des Abdeckmaterials auf die erste Stirnfläche 10 der Filterkassette 3 aufgelegt und mit dieser ersten Stirnfläche 10 verschweißt oder verklebt. Beispielsweise kann es sich bei dem Abdeckmaterial um ein Vliesmaterial aus Polymerfasern handeln, welches mittels einer Heizvorrichtung auf die Stirnfläche thermisch aufgeschweißt werden kann. Dabei ist es von Vorteil, wenn das Abdeckmaterial an allen Seiten um einige Millimeter hervorsteht, so dass die Kante des Randes 9 vom Abdeckmaterial überdeckt wird. Nachdem auf die erste Stirnfläche 10 der Filterkassette 3 ein entsprechendes Abdeckmaterial aufgebracht ist, werden die Abteilungen 28 der Filterkassette mit Filtermaterial befüllt, das Filtermaterial wird eingerüttelt und anschließend wird auf die zweite Stirnfläche 11 ein entsprechender Zuschnitt von Abdeckmaterial aufgebracht. Vorzugsweise handelt es sich bei dem Abdeckmaterial wieder um ein Vliesmaterial aus Polymerfasern, und vorzugsweise wird das Vliesmaterial durch thermisches Aufschweißen auf die zweite Stirnfläche 11 der Filterkassette 3 aufgebracht.

In den Fig. 3a und 3b ist zu erkennen, dass im Bereich des Randes 9 der Filterkassette 3 eine Mehrzahl von Schraublöchern 16 angeordnet ist, die sich in axialer Richtung durch die Filterkassette 3 hindurch erstrecken und zur Verschraubung der Filterkassette 3 mit dem trichterförmigen Halterungsteil 2 dienen. Darüber hinaus ist am Rand 9 der Filterkassette 3 eine Positionierrille 32 zu erkennen. Beim Einsetzen der Filterkassette 3 in die Aufnahme 4 greift die Positioniernase 22 in die Positionierrille 32 ein, so dass die Filterkassette 3 nur in einer bestimmten vorgegebenen Orientierung in die Aufnahme 4 einsetzbar ist.

In Fig. 3c ist die Filterkassette 3 in einer Seitenansicht gezeigt, in der der Rand 9 der Filterkassette, die erste Stirnfläche 10 und die zweite Stirnfläche 11 eingezeichnet sind. Außerdem sind die Trennstege 29 mittels gestrichelter Linien eingezeichnet. Es ist zu erkennen, dass sich die Trennstege 29 nicht vollständig von einer Stirnfläche 10 zur gegenüberliegenden Stirnfläche 11 erstrecken, sondern dass jeweils ein erster Freiraum 30 zwischen den Trennstegen 29 und der ersten Stirnfläche 10 und ein zweiter Freiraum 31 zwischen den Trennstegen 29 und der zweiten Stirnfläche 11 vorgesehen sind, durch die hindurch das Filtermaterial durchgehend an den Stirnflächen 10 und 11 angeordnet ist. Alternativ zu den beidseitig vorgesehenen Freiräumen 30, 31 kann auch lediglich an einer Seite eines Trennstegs ein Freiraum vorgesehen sein.

Darüber hinaus ist in Fig. 3c zu erkennen, dass der Rand 9 der Filterkassette 3 von der Mitte 33 zu der ersten Stirnfläche 10 und zur zweiten Stirnfläche 11 hin jeweils geringfügig nach innen geneigt verläuft, beispielsweise um 0,5° nach innen geneigt. Daraus ergibt sich von der Mitte 33 aus sowohl in Richtung zur ersten Stirnfläche 10 hin als auch zur zweiten Stirnfläche 11 hin ein sich geringfügig konisch verjüngender Verlauf des Rands 9 der Filterkassette 3 zu beiden Stirnflächen 10 und 11 hin. Dadurch wird das Einsetzen der Filterkassette 3 in die Aufnahme 4 erleichtert. Da die umlaufenden Kanten der Stirnflächen 10 und 11 jeweils durch Abdeckmaterial überdeckt werden, wird das Abdeckmaterial an den Kanten beim Zusammenschrauben der Filtervorrichtung 1 zwischen der Filterkassette 3 und der Aufnahme 4 zusammengepresst, wodurch sich ein gasdichter Abschluss zwischen der Filterkassette 3 und der Aufnahme 4 ergibt.

Bei dem in den Fig. 3a bis 3c beschriebenen Beispiel war eine spezielle Ausgestaltung von Trennwänden und Trennstegen vorgesehen worden, die sich als besonders vorteilhaft erwiesen hat. Eine funktionsfähige Filterkassette könnte darüber hinaus auch mit völlig anders angeordneten Trennwänden als den in den Fig. 3a bis 3c gezeigten ausgebildet werden, beispielsweise mit einem regelmäßigen Raster von Trennwänden. Eine für die Filtervorrichtung geeignete Filterkassette 3 kann im Innenraum beliebige Unterteilungen aufweisen.

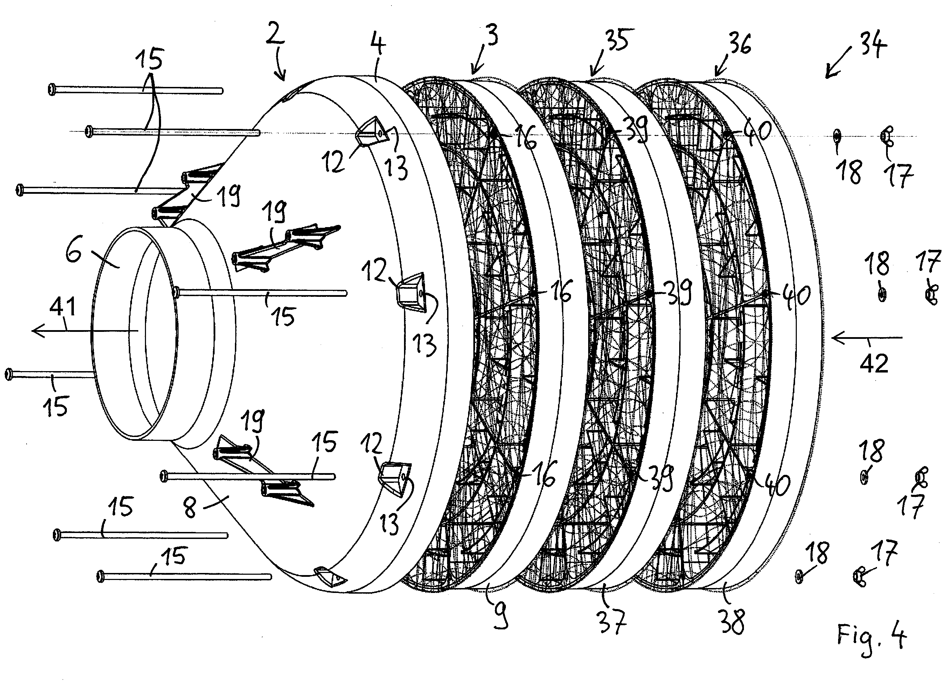

In Fig. 4 ist eine weitere Filtervorrichtung 34 gezeigt, die ein trichterförmiges Halterungsteil 2 sowie mehrere hintereinander angeordnete Filterkassetten 3, 35 und 36 umfasst. Dabei sind jeweils beide Stirnflächen der Filterkassetten 3, 35, 36 mit Abdeckmaterial versehen. Bei der Anordnung der Filterkassetten 3, 35, 36 liegt die Stirnfläche einer Filterkassette jeweils deckungsgleich auf der ihr zugewandten Stirnfläche der benachbarten Filterkassette auf. Auch die Ränder 9, 37, 38 der Filterkassetten liegen deckungsgleich aufeinander auf. Bei der Verschraubung der gesamten Filtervorrichtung 34 werden die Gewindeschrauben 15 durch die Schraublöcher 13 des trichterförmigen Halterungsteils 2 sowie durch die Schraublöcher 16, 39, 40 der drei Filterkassetten 3, 35, 36 geschoben und anschließend mittels der Flügelmuttern 17 verschraubt. Infolge dieser Verschraubung werden das trichterförmige Halterungsteil 2 und die drei Filterkassetten 3, 35, 36 in axialer Richtung so zusammengedrückt, dass die jeweiligen Abdeckmaterialschichten zwischen der Aufnahme 4 und den Rändern 9, 37, 38 zusammengedrückt werden und sich ein dichtender Abschluss zwischen der Aufnahme 4 und den Rändern 9, 37, 38 ergibt. Wenn nun am Anschluss 6 Luft oder ein anderes Gas in Richtung des Pfeils 41 abgesogen wird, dann durchströmt das anströmseitig in Richtung der Pfeile 42 angesogene Gas nacheinander die Filtermaterialien in den Filterkassetten 36, 35 und 3 und wird durch jede dieser Filterkassetten gefiltert. Durch die Hintereinanderschaltung von mehreren Filterkassetten wird eine intensivierte Filterung des angesogenen Gases bewirkt.

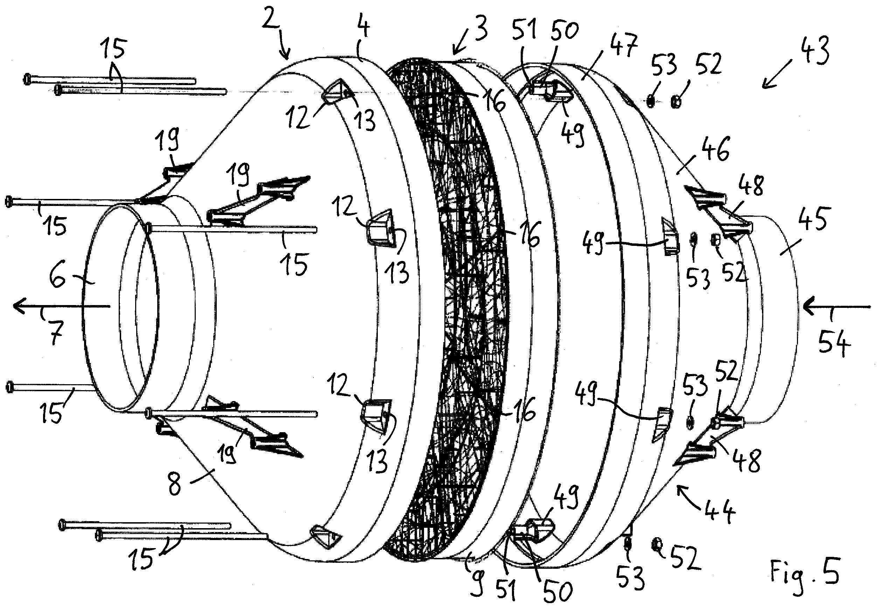

Fig. 5 zeigt eine als Inlinefilter ausgebildete Filtervorrichtung 43, welche zusätzlich zu dem trichterförmigen Halterungsteil 2 und der Filterkassette 3 ein weiteres trichterförmiges Halterungsteil 44 umfasst. Ebenso wie das trichterförmige Halterungsteil 2 weist auch das weitere trichterförmige Halterungsteil 44 einen Anschluss 45 für einen Schlauch oder ein Rohr auf, weitet sich ausgehend von dem Anschluss 45 im Bereich 46 trichterförmig nach außen auf und bildet eine Aufnahme 47 für die Filterkassette 3 aus. Dabei kann das weitere trichterförmige Halterungsteil 44 beispielsweise baugleich zum trichterförmigen Halterungsteil 2 ausgebildet sein, das trichterförmige Halterungsteil 44 kann aber auch eine vom trichterförmigen Halterungsteil 2 abweichende Form aufweisen.

Beim Zusammenbau der Filtervorrichtung 43 wird die Filterkassette 3 mit der Stirnfläche 10 voran in die Aufnahme 4 eingesetzt, so dass ein Teil des Randes 9 der Filterkassette 3 vom Randbereich der Aufnahme 4 umschlossen wird. Anschließend wird die Aufnahme 47 von der gegenüberliegenden Seite her so auf die Filterkassette 3 aufgesteckt, dass die Filterkassette 3 mit der Stirnfläche 11 voran in die Aufnahme 47 eingeschoben wird und der Randbereich der Aufnahme 47 einen Teil des Randes 9 der Filterkassette 3 umschließt. Auf diese Weise wird die Filterkassette 3 von beiden Seiten her durch die Aufnahmen 4, 47 der beiden trichterförmigen Halterungsteile 2, 44 gehaltert. Im Bereich 46 des trichterförmigen Halterungsteils 44 sind Abstandselemente 48 vorgesehen, die beim Einbau der Filtervorrichtung 43 in eine Einbauumgebung einen gewissen Mindestabstand zwischen der Filtervorrichtung 43 und der Einbauumgebung gewährleisten.

Anschließend werden das trichterförmige Halterungsteil 2, die Filterkassette 3 und das weitere trichterförmige Halterungsteil 44 miteinander verschraubt. Hierzu weist das weitere trichterförmige Halterungsteil 44 Einbuchtungen 49 auf, an die Schraubhülsen 50 für die Schraublöcher 51 angeformt sind. Zur Verschraubung werden Gewindeschrauben 15 durch die Schraublöcher 13, 16 und 51 hindurchgesteckt und mittels geeigneter Muttern 52 und Beilagscheiben 53 verschraubt. Dadurch werden das trichterförmige Halterungsteil 2 und das weitere trichterförmige Halterungsteil 44 von beiden Seiten her in axialer Richtung gegen die Filterkassette 3 gepresst. Da die Stirnflächen 10 und 11 der Filterkassette 3 jeweils mit einem Abdeckmaterial versehen sind, das über den Rand 9 hinaus leicht übersteht, wird das Abdeckmaterial beim Verschrauben der Filtervorrichtung 43 zwischen der Aufnahme 4 und dem Rand 9 bzw. zwischen dem Rand 9 und der Aufnahme 47 zusammengedrückt. Dadurch ergibt sich jeweils ein gasdichter Abschluss zwischen dem trichterförmigen Halterungsteil 2, der Filterkassette 3 und dem weiteren trichterförmigen Halterungsteil 44, so dass die gesamte Filtervorrichtung 43 vom Anschluss 45 bis zum Anschluss 6 mit dem zu reinigenden Gas bzw. der zu reinigenden Luft durchströmt werden kann.

Die Inline-Filtervorrichtung 43 kann beispielsweise am abströmseitigen Anschluss 6 mit einem Rohr oder einem Schlauch verbunden werden, um Luft oder ein anderes Gas in Richtung des Pfeils 7 abzusaugen. Hierzu kann der Anschluss 6 beispielsweise mit einem Gebläse oder einem Ventilator verbunden sein. Am anströmseitigen Anschluss 45 ist die Inline-Filtervorrichtung 43 mit einem Schlauch oder einem Rohr verbunden, über das der Inline-Filtervorrichtung 43 ein zu reinigendes Gas in Richtung des Pfeils 54 zugeführt werden kann. Auf diese Weise ergibt sich ein Strom des zu filternden Gases durch die Inline-Filtervorrichtung 43. Dabei wird der Strom des zu filternden Gases durch das trichterförmige Halterungsteil 44 zunächst aufgeweitet und durchdringt dann die etwa senkrecht zum Gasstrom angeordnete Filterkassette 3. Dabei ist der Durchmesser der Filterkassette 3 deutlich höher als der Durchmesser am Anschluss 45, so dass der aufgeweitete Luftstrom die vergleichsweise große zweite Stirnfläche 11 der in etwa senkrecht zum Luftstrom angeordneten Filterkassette 3 durchdringt und dabei gefiltert wird. Die Aufweitung des Gasstroms im trichterförmigen Halterungsteil 44 hat dabei zum einen den Vorteil, dass die Strömungsgeschwindigkeit des zu filternden Gases im Bereich der Filterkassette 3 deutlich abgesenkt wird, so dass das zu filternde Gas das Filtermaterial mit vergleichsweise langsamer Strömungsgeschwindigkeit passiert, so dass für die Adsorption von Verunreinigungen an den Filterpartikeln genügend Zeit zur Verfügung steht. Ein weiterer Vorteil ist, dass der zu filternde Gasstrom durch eine große Stirnfläche hindurchtritt, so dass infolge der großen Querschnittsfläche pro Flächeneinheit nur eine vergleichsweise geringe Menge an Verunreinigungen adsorbiert werden muss. Dadurch wird die Schadstoffadsorption auf eine vergleichsweise große Querschnittsfläche verteilt, so dass das Filtermaterial pro Flächeneinheit nur vergleichsweise wenig Schmutz adsorbieren muss. Die Beladung des Filtermaterials pro Flächeneinheit wird auf diese Weise verringert. Im Ergebnis muss die Filterkassette 3 der Inline-Filtervorrichtung 43 nur vergleichsweise selten ausgewechselt werden und somit wird eine lange Nutzungsdauer ermöglicht.

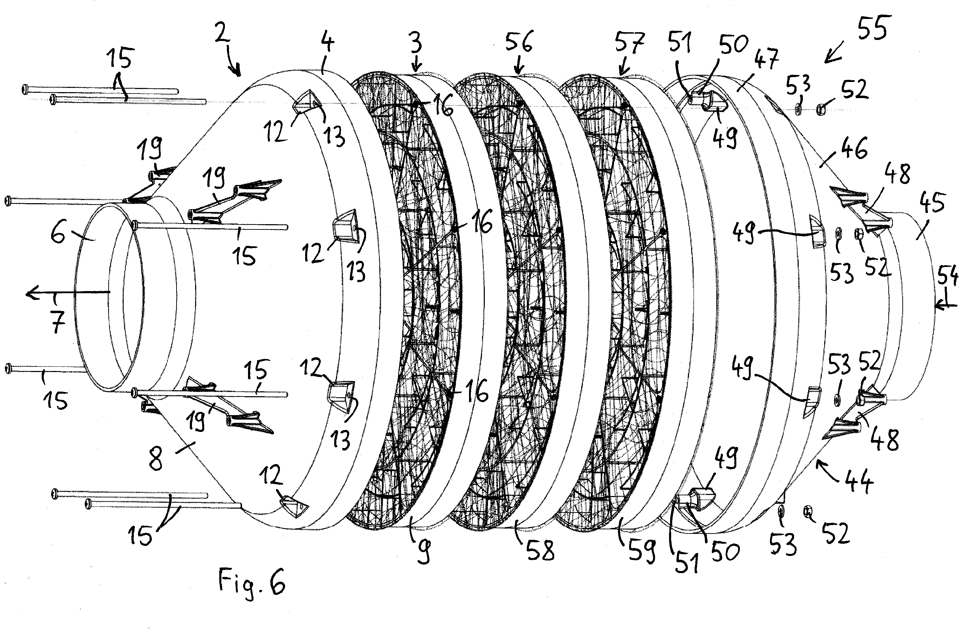

Zur Intensivierung der Filterwirkung können zwischen dem trichterförmigen Halterungsteil 2 und dem weiteren trichterförmigen Halterungsteil 44 auch mehrere hintereinander angeordnete Filterkassetten eingefügt werden. Eine derartige Filtervorrichtung 55 ist in Fig. 6 gezeigt.

In der Filtervorrichtung 55 sind zwischen dem trichterförmigen Halterungsteil 2 und dem weiteren trichterförmigen Halterungsteil 44 insgesamt drei Filterkassetten 3, 56, 57 hintereinander angeordnet, wobei benachbarte Filterkassetten mit ihren Stirnflächen aufeinander liegen. Beim Verschrauben der Filtervorrichtung 55 mittels der Gewindeschrauben 15, der zugehörigen Muttern 52 und der Beilagscheiben 53 werden die drei Filterkassetten 3, 56, 57 zwischen den beiden trichterförmigen Halterungsteilen 2, 44 in axialer Richtung zusammengedrückt. Dadurch wird jeweils ein gasdichter Abschluss zwischen der Aufnahme 4, den Rändern 58, 59 und der Aufnahme 47 ausgebildet. Ein zu filterndes Gas strömt in Richtung des Pfeils 54 durch den Anschluss 45 und anschließend durch die drei hintereinander angeordneten Filterkassetten 57, 56 und 3, wobei das zu filternde Gas beim Durchtritt durch jede der Filterkassetten weiter gereinigt wird, so dass durch die Bereitstellung mehrerer Filterstufen die Intensität der Filterung des Gases erhöht wird. Das gefilterte Gas tritt dann in Richtung des Pfeils 7 aus dem Anschluss 6 aus.

### Bezugszeichenliste

- 1: Filtervorrichtung
- 2: trichterförmiges Halterungsteil
- 3: Filterkassette
- 4: Aufnahme für Filterkassette
- 5: axiale Symmetrieachse
- 6: Anschluss
- 7: Saugrichtung
- 8: Bereich des trichterförmigen Halterungsteils
- 9: Rand der Filterkassette
- 10: erste Stirnfläche der Filterkassette
- 11: zweite Stirnfläche der Filterkassette
- 12: Einbuchtungen
- 13: Schraublöcher des trichterförmigen Halterungsteils
- 14: Abstand
- 15: Gewindeschrauben
- 16: Schraublöcher der Filterkassette
- 17: Flügelmuttern
- 18: Beilagscheiben
- 19: Abstandselemente
- 20: Schraubhülsen
- 21: Auflagestufe
- 22: Positioniernase
- 23: Durchmesser der Filterkassette
- 24: Höhe der Filterkassette
- 25: ringförmig umlaufende Trennwände
- 26: radial verlaufende Trennwände
- 27: radial verlaufende Trennwände
- 28: Abteilungen
- 29: Trennstege
- 30: erster Freiraum
- 31: zweiter Freiraum
- 32: Positionierrille
- 33: Mitte des Randes
- 34: Filtervorrichtung
- 35: zweite Filterkassette
- 36: dritte Filterkassette
- 37: Rand der zweiten Filterkassette
- 38: Rand der dritten Filterkassette
- 39: Schraublöcher der zweiten Filterkassette
- 40: Schraublöcher der dritten Filterkassette
- 41: Ansaugrichtung
- 42: Richtung der einströmenden Luft
- 43: Filtervorrichtung
- 44: weiteres trichterförmiges Halterungsteil
- 45: Anschluss
- 46: Bereich des trichterförmigen Halterungsteils
- 47: Aufnahme für Filterkassette
- 48: Abstandselemente
- 49: Einbuchtungen
- 50: Schraubhülsen
- 51: Schraublöcher
- 52: Muttern
- 53: Beilagscheiben
- 54: Pfeil
- 55: Filtervorrichtung
- 56: zweite Filterkassette
- 57: dritte Filterkassette
- 58: Rand der zweiten Filterkassette
- 59: Rand der dritten Filterkassette

## Patentansprüche

1. Eine Filterkassette (3), welche aufweist
- eine zumindest teilweise gasdurchlässige erste Stirnfläche (10),
- eine gegenüber der ersten Stirnfläche (10) angeordnete zumindest teilweise gasdurchlässige zweite Stirnfläche (11),
- eine umlaufende Randwandung (9), die zusammen mit der ersten Stirnfläche (10) und der zweiten Stirnfläche (11) einen Innenbereich der Filterkassette (3) umgibt,
- wobei der Innenbereich der Filterkassette (3) mit einem partikelförmigen Filtermaterial befüllt ist,
- eine Mehrzahl von Trennwänden (25, 26, 27), die sich innerhalb des Innenbereichs der Filterkassette (3) jeweils von der ersten Stirnfläche (10) zur zweiten Stirnfläche (11) erstrecken und den Innenbereich in eine Mehrzahl von Abteilungen (28) unterteilen,
**dadurch gekennzeichnet, dass**
- im Innenbereich der Filterkassette (3) zusätzlich zu den Trennwänden (25, 26, 27) ein oder mehrere Trennstege (29) angeordnet sind,
- wobei an jedem Trennsteg (29) jeweils mindestens ein Spalt (30, 31) zwischen dem Trennsteg (29) und einer oder beiden Stirnflächen (10, 11) ausgebildet ist, und
- wobei sich das Filtermaterial durch den jeweils mindestens einen Spalt (30, 31) hindurch erstreckt.

2. Eine Filterkassette nach Anspruch 1, **dadurch gekennzeichnet, dass** der mindestens eine Spalt dazu ausgelegt ist, dass das im Innenbereich befindliche Filtermaterial durch den mindestens einen Spalt hindurch durchgängig an einer Innenseite der jeweiligen Stirnfläche anliegend anordenbar ist.

3. Eine Filterkassette nach Anspruch 1 oder Anspruch 2, **dadurch gekennzeichnet, dass** die Trennstege sich über mehr als 60% des Abstands zwischen der ersten und der zweiten Stirnfläche erstrecken.

4. Eine Filterkassette nach einem der Ansprüche 1 bis 3, **dadurch gekennzeichnet, dass** die Trennstege dazu ausgebildet sind, die Abteilungen weiter zu unterteilen.

5. Eine Filterkassette nach einem der Ansprüche 1 bis 4, **dadurch gekennzeichnet, dass** es sich bei dern Filtermaterial um mindestens eines von Aktivkohle und Kokosnussschale handelt.

6. Eine Filterkassette nach einem der Ansprüche 1 bis 5, **dadurch gekennzeichnet, dass** die Filterkassette in axialer Richtung durch die erste Stirnfläche, das Filtermaterial und die zweite Stirnfläche hindurch von zu filterndem Gas durchströmbar ist.

7. Eine Filterkassette nach einem der Ansprüche 1 bis 6, **dadurch gekennzeichnet, dass** die Filterkassette in Form einer Scheibe ausgebildet ist.

8. Eine Filterkassette nach einem der Ansprüche 1 bis 7, **dadurch gekennzeichnet, dass** sich die umlaufende Randwandung vom Rand der ersten Stirnfläche zum Rand der zweiten Stirnfläche erstreckt.

9. Eine Filterkassette nach einem der Ansprüche 1 bis 8, **dadurch gekennzeichnet, dass** eine Höhe der Filterkassette geringer ist als ein maximaler Durchmesser der Filterkassette.

10. Eine Filterkassette nach einem der Ansprüche 1 bis 9, **dadurch gekennzeichnet, dass** an mindestens einer von der ersten und der zweiten Stirnfläche der Filterkassette ein gasdurchlässiges Abdeckmaterial angebracht ist, das das Filtermaterial innerhalb der Filterkassette hält.

11. Eine Filtervorrichtung (1, 34, 43, 55), welche ein trichterförmiges Halterungsteil (2) und eine Filterkassette (3) nach einem der Ansprüche 1 bis 10 umfasst, wobei die Filterkassette (3) in eine Aufnahme (4) des trichterförmigen Halterungsteils (2) einsetzbar ist

## Claims

1. A filter cassette (3) comprising
- an at least partly gas-permeable first face (10),
- an at least partly gas-permeable second face (11) disposed opposite to the first face (10),
- a circumferential edge wall (9) which, together with the first face (10) and the second face (11), encloses an interior of the filter cassette (3),
- wherein the interior of the filter cassette (3) is filled with a particulate filter material,
- a plurality of partition walls (25, 26, 27) respectively extending from the first face (10) to the second face (11) within the interior of the filter cassette (3) and dividing the interior into a plurality of compartments (28),
**characterised in that**,
- in addition to the partition walls (25, 26, 27), one or more dividing webs (29) are formed in the interior of the filter cassette (3),
- wherein, at each dividing web (29), at least one gap (30, 31) is formed between the dividing web (29) and one or both faces (10, 11), respectively, and
- wherein the filter material extends through the respectively at least one gap (30, 31).

2. A filter cassette according to claim 1, **characterised in that** the at least one gap is configured so that the filter material present in the interior is arrangeable so as to be continuously abutting on an inner side of the respective face through the at least one gap.

3. A filter cassette according to claim 1 or claim 2, **characterised in that** the dividing webs extend over more than 60% of the distance between the first and the second face.

4. A filter cassette according to one of the claims 1 to 3, **characterised in that** the dividing webs are configured to further subdivide the compartments.

5. A filter cassette according to one of the claims 1 to 4, **characterised in that** the filter material is at least one of activated carbon and coconut shell.

6. A filter cassette according to one of the claims 1 to 5, **characterised in that** gas to be filtered can flow through the filter cassette through the first face, the filter material, and the second face in the axial direction.

7. A filter cassette according to one of the claims 1 to 6, **characterised in that** the filter cassette is formed in the shape of a disk.

8. A filter cassette according to one of the claims 1 to 7, **characterised in that** the circumferential edge wall extends from the edge of the first face to the edge of the second face.

9. A filter cassette according to one of the claims 1 to 8, **characterised in that** a height of the filter cassette is smaller than a maximum diameter of the filter cassette.

10. A filter cassette according to one of the claims 1 to 9, **characterised in that** a gas-permeable cover material retaining the filter material within the filter cassette is attached to at least one of the first and the second face of the filter cassette.

11. A filter device (1, 34, 43, 55) comprising a funnel-shaped holder part (2) and a filter cassette (3) according to one of the claims 1 to 10, wherein the filter cassette (3) is insertable into a receptacle (4) of the funnel-shaped holder part (2).

## Revendications

1. Cassette filtrante (3), présentant :
- une première surface frontale (10) au moins partiellement perméable au gaz,
- une deuxième surface frontale (11) au moins partiellement perméable au gaz et positionnée en face de ladite première surface frontale (10),
- une paroi périphérique de bordure (9) entourant avec la première surface frontale (10) et la deuxième surface frontale (11) un espace intérieur de ladite cassette filtrante (3),
- l'espace intérieur de ladite cassette filtrante (3) étant rempli d'une matière filtrante constituée de particules,
- une pluralité de cloisons (25, 26, 27) qui s'étendent chacune au sein de l'espace intérieur de la cassette filtrante (3) de la première surface frontale (10) à la deuxième surface frontale (11) et divisent l'espace intérieur en une pluralité de compartiments (28),
**caractérisée en ce que**
- en complément aux cloisons (25, 26, 27), un ou plusieurs cloisonnement(s) (29) est/sont positionné(s) dans l'espace intérieur de la cassette filtrante (3),
- au moins un entrefer (30, 31) étant formé sur chacun des cloisonnements (29) entre le cloisonnement (29) et l'une ou les deux surfaces frontales (10, 11) et
- la matière filtrante s'étendant à travers l'au moins un entrefer (30, 31).

2. Cassette filtrante selon la revendication 1, **caractérisée en ce que** l'au moins un entrefer est destiné à ce que la matière filtrante agencée dans l'espace intérieur est positionnable de manière adjacente à travers ledit au moins un entrefer en continu sur une face intérieure de la surface frontale concernée.

3. Cassette filtrante selon la revendication 1 ou la revendication 2, **caractérisée en ce que** les cloisonnements s'étendent sur plus de 60% de l'espacement entre la première et la deuxième surface frontale.

4. Cassette filtrante selon l'une des revendications 1 à 3, **caractérisée en ce que** les cloisonnements sont formés pour subdivisionner les compartiments davantage.

5. Cassette filtrante selon l'une des revendications 1 à 4, **caractérisée en ce que** la matière filtrante est au moins l'un de charbon actif et de coquille de noix de coco.

6. Cassette filtrante selon l'une de revendications 1 à 5, **caractérisée en ce que** la cassette filtrante est traversable dans le sens axial par du gaz à filtrer, à travers la première surface frontale, la matière filtrante et la deuxième face frontale.

7. Cassette filtrante selon l'une des revendications 1 à 6, **caractérisée en ce que** la cassette filtrante est formée en disque.

8. Cassette filtrante selon l'une des revendications 1 à 7, **caractérisée en ce que** la paroi périphérique de bordure s'étend de la bordure de la première surface frontale à la bordure de la deuxième surface frontale.

9. Cassette filtrante selon l'une des revendications 1 à 8, **caractérisée en ce qu'**une hauteur de la cassette filtrante est inférieure à un diamètre maximal de la cassette filtrante.

10. Cassette filtrante selon l'une des revendications 1 à 9, **caractérisée en ce qu'**un matériau de recouvrement perméable au gaz et maintenant la matière filtrante au sein de la cassette filtrante est positionné sur au moins la première ou la deuxième surface frontale de la cassette filtrante.

11. Dispositif filtrant (1, 34, 43, 55) comprenant une partie de support en forme d'entonnoir (2) et une cassette filtrante (3) selon l'une des revendications 1 à 10, la cassette filtrante (3) étant insérable dans un logement (4) de la partie de support en forme d'entonnoir (2).
